# EUROPÄISCHE PATENTSCHRIFT

(11) **EP 0 540 910 B1**
(45) Veröffentlichungstag und Bekanntmachung des Hinweises auf die Patenterteilung: **14.06.1995**
(21) Anmeldenummer: 92117512.1
(22) Anmeldetag: 14.10.1992
(51) Int. Cl.: B65H 20/12, G01D 15/28, B26D 7/01, B26D 7/06

(54) **Vorrichtung zur Be- oder Verarbeitung einer Materialbahn**
Device for processing or handling web material
Dispositif pour traiter ou manipuler une matière en bande

(30) Priorität: 05.11.1991 DE 4136738
(43) Veröffentlichungstag der Anmeldung: 12.05.1993
(73) Patentinhaber: Aristo Graphic Systeme GmbH & Co. KG, D-22525 Hamburg (DE)
(72) Erfinder: Janezek, Henning, W-2120 Lüneburg (DE)

(56) Entgegenhaltungen:
- DE-A- 3 225 593
- DE-A- 4 002 894
- FR-A- 2 099 138
- GB-A- 2 006 168
- IBM TECHNICAL DISCLOSURE BULLETIN Bd. 19, Nr. 5, 5. Oktober 1976, NEW YORK US Seiten 1645 - 1646 R. M. GLOWA ET AL. 'Vacuum Transport Drum'

## Beschreibung

Die Erfindung bezieht sich auf eine Vorrichtung zur Be- oder Verarbeitung einer Materialbahn, die von einem Vorratsbereich über eine eine Bearbeitungsfläche bildende, angetriebene Trommel geführt ist, die im axialen Abstand angeordnete, jeweils mit ihrem Mitten auf einem Umfangskreis der Trommel liegende Gruppen von mindestens 10 Ansaugöffnungen aufweist, deren innere Enden mit einer Unterdruckquelle verbindbar sind und deren äußere Enden in die Bearbeitungsfläche münden, wobei mindestens einigen der Gruppen von Ansangöffnungen jeweils eine stufenförmige endlose Umlaufkante zugeordnet ist.

Eine bekannte Vorrichtung dieser Art (DE-OS 40 02 894) kann beispielsweise zur Bearbeitung von bahnförmigem Folienmaterial eingesetzt werden, bei dem die eigentliche Kunststoffolie mit einer Klebschicht versehen und diese Klebstoffschicht mit einer abziehbaren Schutzfolie abgedeckt ist. Aus der Kunststoffolie können durch mit einem Beareitungswerkzeug hergestellte Einschnitte bis an die Schutzfolie Bereiche herausgeschnitten und so aufklebbare Symbole oder Darstellungen erzeugt werden, wobei das Werkzeug auf Bereiche des Folienmaterials arbeitet, die auf der angetriebenen Trommel aufliegen und so gegen eine Verlagerung unter Einwirkung des Werkzeugs abgestützt werden.

Entsprechend lassen sich in der bekannten Vorrichtung Materialbahnen mittels eines Schreib- oder Zeichenwerkzeugs beschriften oder bezeichnen.

Wenn die Materialbahn im Verlauf des Be- und Verarbeitungsvorganges in Richtung ihrer Längserstreckung über die Trommel bewegt und dabei durch den über die Ansaugöffnungen wirkenden Unterdruck in Umfangsrichtung flächig an der Bearbeitungsfläche gehalten wird, kann es vorkommen, daß sich eine seitliche Wanderungsbewegung der Materialbahn ergibt, da diese allein durch den Unterdruck, Jedoch nicht durch formschlüssigen Eingriff, etwa mit seitlichen Stachelwalzen auf der Bearbeitungsfläche positioniert und allmählich über diese geführt wird.

Es ist Aufgabe der Erfindung, eine Möglichkeit zu schaffen, durch die derartige Wanderungsbewegungen auf der Trommel vermieden werden.

Zur Lösung dieser Aufgabe wird eine Vorrichtung der eingangs erwähnten Art erfindungsgemäß derart ausgestaltet, daß in axialem Abstand von 3 mm bis 5 mm vom Umfangskreis zumindest einiger der Gruppen von Ansaugöffnungen die in einer Ebene senkrecht zur Trommellängsachse liegende Umlaufkante eine Stufenhöhe von 0,05 mm bis 0,35 mm aufweist.

Es hat sich gezeigt, daß sich durch eine derartige Ausbildung der die Bearbeitungsfläche bildenden Umfangsfläche der zylindrischen Trommel eine Positionierung der Materialbahn im Betrieb ergibt und seitliche Wanderungsbewegungen vermieden werden. Dies wird dadurch bewirkt, daß die Materialbahn durch die nahe an der jeweiligen Gruppe von Ansaugöffnungen vorgesehene stufenförmige Umfangskante so durch den wirkenden Unterdruck gegen diese gezogen wird, daß sich eine Mikroverformung der Materialbahn an der Umfangskante ergibt, durch die eine Verlagerungsbewegung der Materialbahn in axialer Richtung der Trommel behindert wird.

Es ist zwar bereits bekannt (DE-OS 32 25 593), die Oberfläche einer zu bearbeitendes Material aufnehmenden und teilweise durch Unterdruck haltenden Trommel mit Nuten zu versehen, die in axialer Richtung und in Umfangsrichtung verlaufende Kanalabschnitte bilden, wobei in Eckpunkten der Kanalabschnitte Ansaugöffnungen vorhanden sind. Diese Kanalabschnitte dienen zur besseren Unterdruckverteilung für die Halterung des zu bearbeitenden bogenförmigen Materials, das zur Vermeidung von Wanderungsbewegungen zusätzlich mechanisch auf der Trommeloberfläche festgelegt werden muß, und die Kanalabschnitte bilden keine in Umfangsrichtung durchgehenden oder endlosen Umfangskanten. Vielmehr sind die in Umfangsrichtung verlaufenden Kanten mehrfach durch axiale Kanäle unterbrochen, und sie münden an beiden Enden in axial verlaufende Kanäle.

Demgegenüber sind, wie vorstehend erwähnt, bei der erfindungsgemäß ausgebildeten Trommel in Umfangsrichtung endlose Umlaufkanten vorhanden, die nicht durch axiale Kanäle unterbrochen werden, und die im übrigen auch nicht dazu dienen, die Verteilung des Unterdrucks zu unterstützen. Vielmehr ist die Anzahl der Ansaugöffnungen jeder auf einem Umfangskreis liegenden Gruppe so groß, daß sich allein durch das Vorhandensein der Anzahl von Ansaugöffnungen ein ausreichend großer Unterdruck an der Unterseite der Materialbahn ausbildet, ohne daß es kanalförmiger Vertiefungen zur weiteren Verteilung des Unterdrucks bedarf.

Aus der GB-A 2 006 168 ist es bekannt, eine Trommel mit umlaufenden Nuten zu versehen, wobei im Nutgrund der 1., 3., 5., 7., etc. Nut mit einer Vakuumeinrichtung verbundene Ansaugöffnungen angeordnet sind. In die ohne Ansaugöffnungen gestalteten Nuten greifen Stapelräder oder -Scheiben ein, die eine durch die mit einem Vakuum beaufschlagte Trommel transportierte Papierbahn von der Trommel abheben und auf einen Stapel legen.

Es ist ferner bereits bekannt (EP-A-0 376 127), eine Unterdruck-Trommel mit sowohl in axialer Richtung als auch in Umfangsrichtung verlaufenden Kanälen zu versehen, in die Ansaugöffnungen münden, so daß sich eine Verteilung des Unterdrucks sowohl in axialer als auch in Umfangsrichtung ergibt. Die diese Kanäle aufweisende Oberfläche der Trommel bildet jedoch nicht die Bearbeitungsfläche, sondern ist mit porösem Material abgedeckt, durch das hindurch der Unterdruck auf das Bahnmaterial wirkt, das überhaupt nicht mit der die Kanäle aufweisenden Trommelfläche in Berührung kommt.

In einer bevorzugten Ausgestaltung der erfindungsgemäß ausgebildeten Trommel sind zu beiden Seiten des Umfangskreises zumindest einiger der Gruppen von Saugöffnungen stufenförmige, endlose Umlaufkanten vorgesehen, zwischen denen die jeweilige Gruppe von Ansaugöffnungen mittig angeordnet ist, und der Trommeldurchmesser ist im Bereich zwischen den zu einer Gruppe von Ansaugöffnungen gehörenden Umlaufkanten kleiner als in axial außerhalb an die Umlaufkanten anschließenden Bereichen. Auf diese Weise befindet sich die Gruppe von Ansaugöffnungen in einer Umfangsnut, die an beiden Seiten von Umlaufkanten begrenzt wird, so daß die Materialbahn zu beiden Seiten der Gruppe von Ansaugöffnungen durch den wirkenden Unterdruck gegen Umlaufkanten gezogen wird.

Die zwischen den zu einer Gruppe von Ansaugöffnungen gehörenden Umlaufkanten gebildete endlose Umfangsnut hat vorzugsweise in axialer Richtung der Trommel eine konstante Tiefe.

In einer anderen Ausgestaltung der Erfindung befindet sich die einer Umlaufkante zugeordnete Gruppe von Ansaugöffnungen in einer endlosen Ringnut, die in axialer Richtung der Trommel konstante Tiefe hat und an der der Umlaufkante abgewandten Seite der Gruppe von Ansaugöffnungen eine axiale Erstreckung aufweist, die das 8-bis 20-Fache des Abstandes zwischen der Umlaufkante und der Gruppe von Ansaugöffnungen beträgt. Dabei kann die Ringnut zu beiden Seiten von einer stufenförmigen, endlosen Umlaufkante begrenzt sein.

In diesem Fall befindet sich eine Gruppe von Ansaugöffnungen in einer Ringnut, die eine verhältnismäßig große axiale Erstreckung hat. Die Gruppe von Ansaugöffnungen liegt jedoch sehr nahe einer Umlaufkante, so daß der über die Ansaugöffnungen auf die Materialbahn wirkende Unterdruck die Materialbahn gegen die benachbarte Umlaufkante zieht.

Es sei darauf hingewiesen, daß die Stufenhöhe der Umlaufkanten sehr gering ist, so daß sie die Bearbeitung der Materialbahn auf der von der Trommel gebildeten Bearbeitungsfläche nicht beeinträchtigt, sondern die Bearbeitungsfläche trotz der vorhandenen Umlaufkanten für den jeweiligen Bearbeitungsvorgang ausreichend eben ist.

Die Erfindung wird im folgenden anhand der Figuren näher erläutert.
- Figur 1: zeigt in einer perspektivischen Teildarstellung eine Vorrichtung von der den Vorratsbereich aufweisenden Seite der Trommel her gesehen.
- Figur 2: zeigt in perspektivischer Darstellung die Vorrichtung aus Figur 1 von der die Aufnahmeeinrichtung aufweisenden Seite der Trommel her gesehen.
- Figur 3: zeigt schematisch die Form des um die Antriebsrolle, die Leerlaufrolle und die Zusatz-Leerlaufrolle geführten Bandes der Vorrichtung gemäß Figuren 1 und 2, dessen oberes Trum den Stützbereich der Aufnahmeeinrichtung bildet.
- Figur 4: zeigt in einer perspektivischen Teildarstellung die Umlaufkanten aufweisende Oberfläche der Trommel.
- Figur 5: zeigt einer Darstellung entsprechend Figur 4 eine andere Ausbildung der Oberfläche der Trommel.

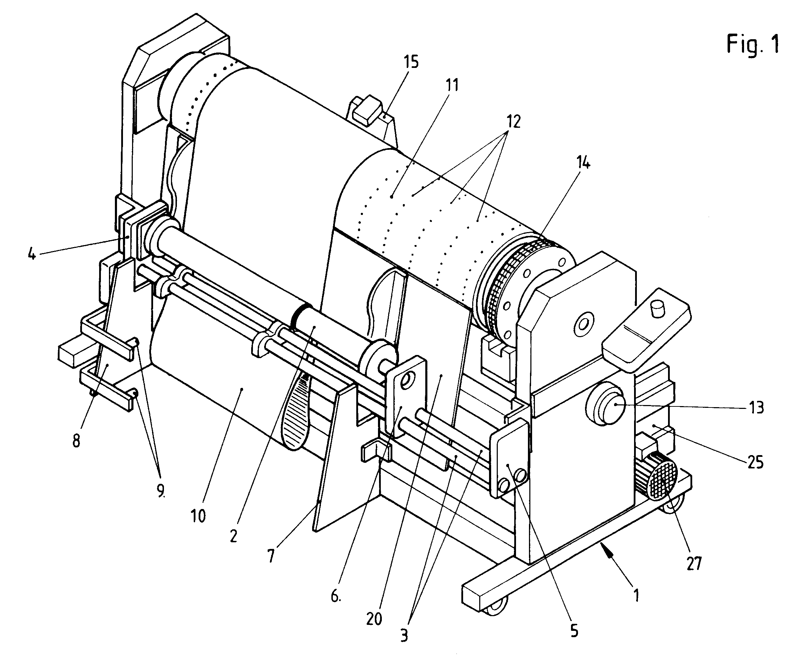

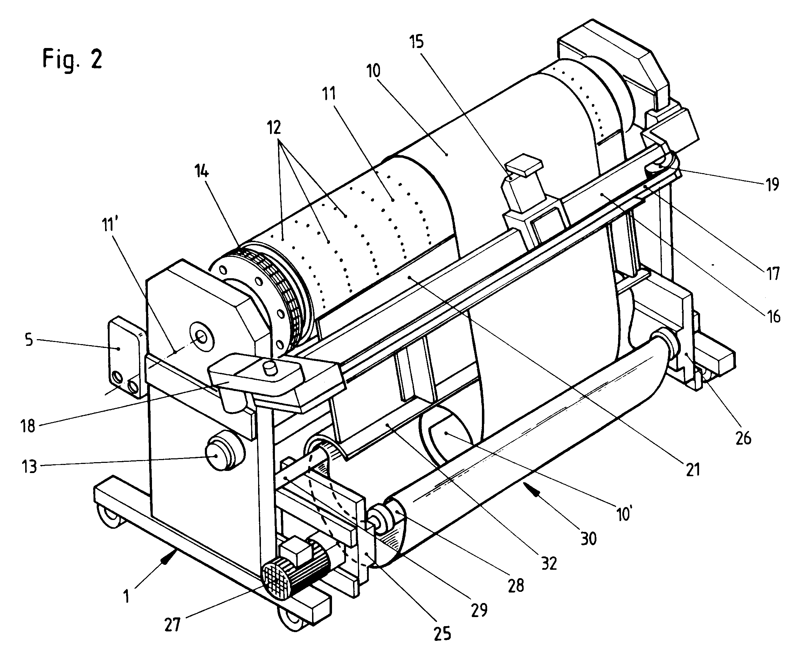

Die Vorrichtung gemäß Figuren 1 und 2 hat einen auf Rollen angeordneten Rahmen 1, zwischen dessen senkrechten Seitenwangen im oberen Endbereich eine Trommel 11 um ihre Längsachse 11' drehbar gehaltert ist. Die Trommel 11 weist an einem Ende eine zahnradförmige Scheibe 14 auf, die in nicht dargestellter Weise mit der Ankerwelle eines Antriebsmotors 13 gekoppelt ist, der gesteuert in beiden Richtungen drehbar ist. In der Wandung der Trommel 11 sind Ansaugöffnungen 12 vorhanden, durch die von innen in bekannter Weise ein Unterdruck anlegbar ist, mit dessen Hilfe die zu bearbeitende Materialbahn 10 auf der Oberfläche der Trommel 11 festgehalten wird, so daß sie sich zusammen mit dieser bewegt.

Die Materialbahn 10 wird von einem Vorratsbereich abgewickelt, der eine Vorratsrolle 2 aufweist (Figur 1), die über Lagerböcke 4, 6 an parallel zur Drehachse 11' der Trommel 11 verlaufenden Halteschienen 3 befestigt ist. Diese Halteschienen 3 sind einerseits an dem Haltebock 4 und andererseits an einem zusätzlichen, an einer Seitenwange des Rahmens 1 befestigten Haltebock 5 gehalten. Die Vorratsrolle 2 wird in nicht dargestellter, jedoch für derartige Vorrichtungen bekannter Weise gesteuert angetrieben, um immer eine ausreichende Menge Bahnmaterial abzugeben, wobei dieses Bahnmaterial zwischen Vorratsrolle 2 und Trommel 11 in der in Figur 1 angedeuteten Weise einen Durchhang bildet. Mit Hilfe von Sensoren 9 wird dieser Durchhang überwacht, so daß bei zu großem Durchhang der Antrieb der Vorratsrolle 2 unterbrochen und bei zu geringem Durchhang die Vorratsrolle 2 zur Abgabe von Bahnmaterial angetrieben wird.

An der die Vorratsrolle 2 aufweisenden Seite des Rahmens 1 sind seitliche Schutzbleche 7, 8 vorhanden, von denen das Schutzblech 7 entsprechend den Abmessungen der eingesetzten Vorratsrolle 2 seitlich verlagerbar ist. Ferner ist zwischen Vorratsrolle 2 und Trommel 11 ein Führblech 20 vorhanden, das im wesentlichen tangential bezüglich der Trommel 11 am Rahmen 1 gehalten ist und über das die Materialbahn 10 auf die Trommel 11 gleitet. Das Führblech 20 definiert einen genauen Übergang des Bahnmaterials auf die Trommel 11, d.h. nur oberhalb der Oberkante des Führbleches 20 befindliches Bahnmaterial wird durch den an den Öffnungen 12 anliegenden Unterdruck an die Oberfläche der Trommel 11 angesaugt, während im Bereich des Führbleches 20 befindliches Bahnmaterial frei bewegbar bleibt.

An der der Vorratsrolle 2 abgewandten Seite der Trommel 11 ist am Rahmen 1 eine Führschiene 16 befestigt, die sich parallel zur Drehachse 11' der Trommel 11 erstreckt und auf der der Werkzeugkopf 15 hin- und herbewegbar gehalten ist. Der Werkzeugkopf 15 kann in bekannter Weise ein Schneidwerkzeug oder einen Zeichenstift tragen und in ebenfalls bekannter Weise zwischen einer Stellung, in der Schneidwerkzeug oder Schreibstift in Eingriff mit der Materialbahn steht, und einer Stellung bewegt werden, in der kein Eingriff mit der Materialbahn 10 besteht. Dies kann jedoch auch in bekannter Weise durch entsprechende Bewegung des Schneidwerkzeugs bzw. des Schreibstiftes erreicht werden.

Zur Bewegung des Werkzeugkopfes 5 entlang der Führschiene 16 ist am Werkzeugkopf 15 ein Zahnriemen 17 befestigt, der an einem Ende der Führschiene 16 über ein Zahnrad 19 läuft und am anderen Ende mit einem Antriebsmotor 18 verbunden ist, so daß der Werkzeugkopf 15 durch gesteuerten Antrieb des Motors 18 in der für die Be- und Verarbeitung der Materialbahn 10 erforderlichen Weise entlang der Führschiene 16 hin- und herbewegt werden kann.

Zwischen Führschiene 16 und Trommel 11 ist am Rahmen 1 ein Führblech 21 befestigt, dessen Anordnung und Funktion derjenigen des bereits beschriebenen Führbleches 20 auf der gegenüberliegenden Seite entspricht.

Unterhalb der Trommel 11 und unterhalb der Führschiene 16 befindet sich eine Aufnahmeeinrichtung, die im wesentlichen durch ein endloses Band 30 gebildet wird, das beispielsweise aus Kautschuk mit aufgerauhter Oberfläche besteht. Zur Halterung des endlosen Bandes 30 dient eine zwischen den Seitenwangen des Rahmens 1 gehalterte, frei drehbare Leerlaufwalze 29 und eine zwischen am Rahmen 1 befestigten Böcken 25 und 26 drehbar gehalterte Antriebswalze 28, die von einem am Bock 25 befestigten Motor 27 kontinuierlich angetrieben wird. Eine frei drehbare Zusatz-Leerlaufwalze 31, die ebenfalls zwischen den Böcken 25 und 26 gehaltert ist, sitzt unterhalb von Antriebswalze 28 und Leerlaufwalze 29 in einer senkrechten Ebene, die gleichen Abstand von der senkrechten Ebene durch die Drehachse der Antriebswalze 28 und der senkrechten Ebene durch die Drehachse der Leerlaufwalze 29 hat.

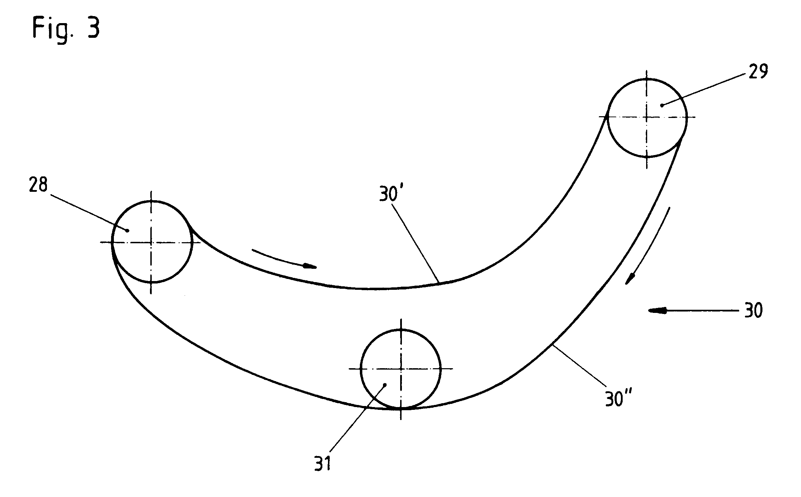

Das endlose Band 30 hat eine Länge, die 10% bis 15% größer ist als der kürzeste Umfang um die Walzen 28, 29, 31. In einem Ausführungsbeispiel beträgt der minimale Umfang um die Walzen 1.180 mm, während das Band eine Länge von 1.330 mm hatte. Infolge dieser größeren Abmessung des Bandes 30 ergibt sich ein Durchhang, und das obere Trum 30' des Bandes 30 bildet, wie insbesondere Figur 3 zeigt, eine wannenförmige Vertiefung, die an der Seite der Leerlaufwalze 29 wegen deren Lage oberhalb der Antriebswalze 28 weiter nach oben ansteigt als an der der Antriebswalze 28 benachbarten Seite. Das untere Trum 30'' des Bandes 30 läuft über die Unterseite der Zusatz-Leerlaufwalze 31.

Die Antriebswalze 28 steht mit dem Band 30 so in Eingriff, daß sich zwischen diesen im Betrieb keine Relativbewegung ergibt, d.h. der Reibungskoeffizient zwischen Antriebswalze 28 und Band 30 wird ausreichend groß gewählt oder es wird eine zusätzliche, nicht dargestellte Andruckwalze eingesetzt. Die Antriebswalze 28 dreht das Band 30 in der in Figur 3 durch einen Pfeil angedeuteten Richtung, so daß ein Punkt des oberen Trums 30' des Bandes 30 sich von der Antriebswalze 28 zur Leerlaufwalze 29 verlagert. Dabei bleibt der Durchhang des oberen Trums 30' konstant.

Wie Figur 2 zu entnehmen ist, liegt das obere Trum 30' derart unterhalb der Trommel 11, daß das von der Trommel 11 ablaufende Bahnmaterial durch Schwerkraft in Berührung mit einem Bereich des oberen Trums 30' nahe der Antriebswalze 28 kommt und infolge dieser Berührung in Richtung auf die Leerlaufwalze 29 mitgenommen wird. In diesem Zusammenhang sei noch einmal erwähnt, daß das zu be- oder verarbeitende Bahnmaterial eine gewisse Eigensteifigkeit hat und üblicherweise infolge seiner vorherigen Aufwicklung auf der Vorratsrolle 2 sowie dem Überlaufen der gekrümmten Oberfläche der Trommel 11 etwas vorgebogen ist, so daß es nicht nur nicht auf dem Trum 30' zusammenfällt, sondern bereits in Richtung der Bewegung des oberen Trums 30' des Bandes 30 vorgebogen ist.

Die Mitnahmebewegung für das Bahnmaterial durch das obere Trum 30' des Bandes 30 führt wegen des unvermeidbaren Zurückrutschens des Bahnmaterials im ansteigenden Teil des oberen Trums 30' und der dabei weiterhin auf das Bahnmaterial wirkenden Kraftkomponente in Richtung des ansteigenden Teils des Trums 30' zu einer Wickelbewegung des Bahnmaterials, so daß dieses in Abhängigkeit von der von der Trommel 11 ablaufenden Menge an Bahnmaterial allmählich aufgewickelt wird, wie dies in Figur 2 angedeutet ist. Diese Aufwickelbewegung wird dadurch unterstützt, daß benachbart zur Leerlaufrolle 29 am Rahmen 1 ein Umlenkblech 32 befestigt, das vom oberen Trum 30' her gesehen konkav gekrümmt ist und daher mit seiner Krümmung eine Art Fortsetzung der oberen Krümmung des Trums 30' bildet sowie der Krümmung des aufgewickelten Bahnmaterials entspricht.

Somit wird mit Hilfe des endlosen Bandes 30 ein aufgewickelter Abschnitt 10' (Figur 2) der Materialbahn 10 erzeugt, der ohne einen eingesetzten Kern ist und der sich insbesondere bei einer Drehbewegung der Trommel 11, die zu einem Zurückziehen von bereits von ihr abgelaufenem Bahnmaterial führt, ohne weiteres wieder ausreichend weit abgewickelt werden kann. Es ist daher auch nicht erforderlich, zwischen Trommel 10 und Band 30 einen schlaufenförmigen Durchhang aus Bahnmaterial vorzusehen.

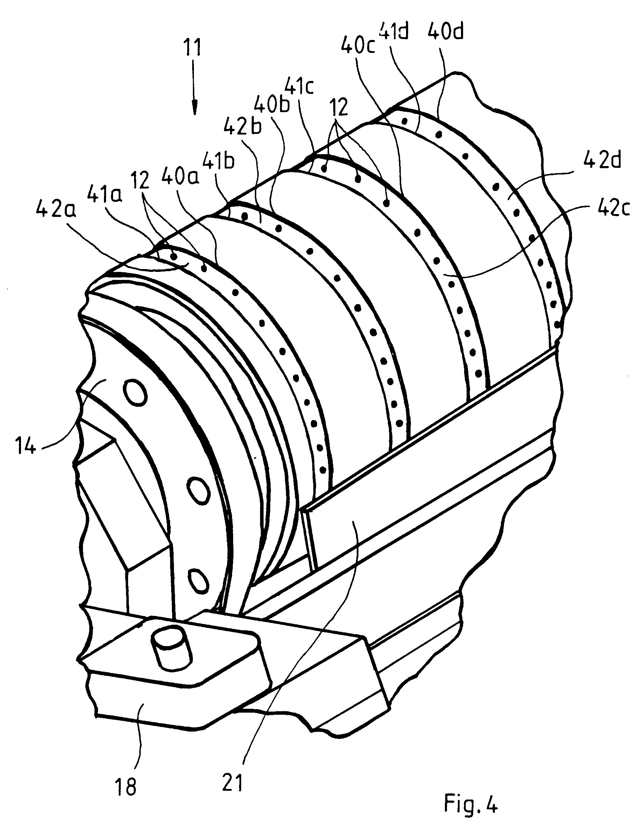

Wie in Figur 4 zu erkennen ist, sind die Ansaugöffnungen 12 der Trommel 11 in Gruppen angeordnet, von denen jede Gruppe von Ansaugöffnungen auf einem Umfangskreis der Trommel 11 liegt und die Anzahl der Ansaugöffnungen 12 pro Gruppe verhältnismäßig groß ist, mindestens 10, vorzugsweise 25 oder mehr beträgt. Die Querschnitte der Ansaugöffnungen 12 sind so gewählt, daß der durch die Ansaugöffnungen 12 auf die Materialbahn 10 wirkende Unterdruck erzeugt werden kann, auch wenn, wie im Betrieb üblich, nicht alle Ansaugöffnungen 12 der Trommel 11 durch aufliegendes Bahnmaterial abgedichtet werden.

Die Ansaugöffnungen 12 haben beispielsweise einen Durchmesser von 0,9 bis 1,2 mm, und die Gruppen von Ansaugöffnungen befinden sich in einem axialen Abstand ihrer durch die Öffnungsmitten verlaufenden Umfangskreise von 40 mm bis 120 mm, wobei für einen normalen Betrieb mit sich im wesentlichen über die gesamte Breite der Trommel erstreckendem Bahnmaterial 10 ein Abstand von 90 mm bis 120 mm ausreicht.

Wie in Figur 4 zu erkennen ist, liegen die einzelnen Gruppen von Ansaugöffnungen 12 mittig in Umfangsnuten 42a, 42b, 42c, 42d, die endlos sind und seitlich von entsprechend endlosen, stufenförmigen Umlaufkanten 40a, 41a, 40b, 41b, 40c, 41c, 40d, 41d begrenzt werden. Dabei beträgt der Abstand zwischen den eine Umfangsnut 42a, 42b, 42c, 42d begrenzenden Umlaufkanten 40a, 41a bzw. 40b, 41b bzw. 40c, 41c bzw. 40d, 41d 3 mm bis 12 mm, vorzugsweise 6 mm bis 9 mm, und bei einem Durchmesser der Ansaugöffnungen 12 von 1,1 mm, vorzugsweise 8 mm. Die über die axiale Länge konstante Tiefe der Umfangsnuten 42a, 42b, 42c, 42d und damit die Stufenhöhe der zugehörigen Umlaufkanten beträgt vorzugsweise 0,05 mm bis 0,35 mm, insbesondere 0,05 mm bis 0,1 mm.

Bei einer Trommelausbildung gemäß Figur 4 wird die Materialbahn 10 durch den von den Ansaugöffnungen 12 aufgebrachten Unterdruck gegen die die Bearbeitungsfläche bildende Oberfläche der Trommel 11 gezogen, wobei der Unterdruck selbstverständlich besonders stark in den Bereichen der Ansaugöffnungen 12 ist. Infolgedessen wird in diesem Bereich das Material der Materialbahn 10 besonders stark gegen die Trommeloberfläche gezogen, und auf diese Weise etwas in die Umfangsnuten 42a, 42b, 42c, 42d hineinverlagert, so daß sich eine ausgeprägte Anlage an den Umlaufkanten 40a, 41a, 40b, 41b, 40c, 41c, 40d, 41d ergibt. Auf diese Weise wird die Materialbahn gegen axiale Wanderungsbewegungen gesichert.

Es sei erwähnt, daß die Tiefe der Umfangsnuten 42a, 42b, 42c, 42d so gewählt wird, daß sich einerseits eine ausreichende Positionierwirkung der Umlaufkanten 40a, 41a, 40b, 41b, 40c, 41c, 40d, 41d ergibt und andererseits die entstehende Verformung der Materialbahn nicht den Bearbeitungsvorgang beeinträchtigt sowie insbesondere nicht dazu führt, daß sich die Materialbahn in den Bereichen unmittelbar außerhalb der Umfangsnuten 42a, 42b, 42c, 42d wölbt und so außer Eingriff der Trommeloberfläche kommt.

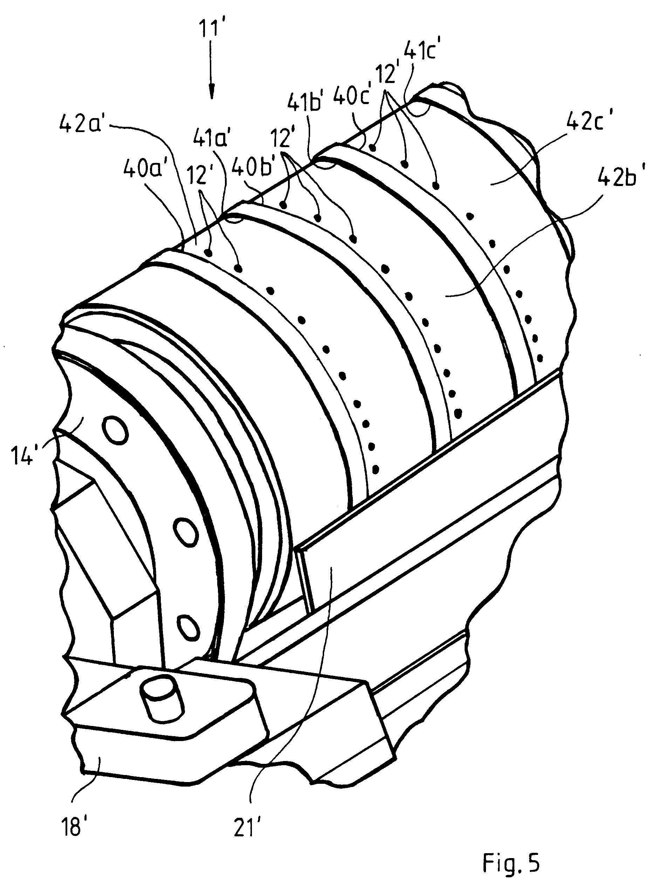

In dem Ausführungsbeispiel gemäß Figur 5 sind gleiche oder entsprechende Teile mit gleichen Bezugszeichen, jedoch zusätzlich mit ' gekennzeichnet.

Wie zu erkennen ist, weicht die Trommel 11' in ihrer Oberflächengestaltung von der Trommel 11 dadurch ab, daß sich die Gruppen von Ansaugöffnungen 12' in geringen Abstand von einer Umlaufkante 40a', 40b', 40c' befindet, so daß insoweit ein Aufbau entsprechend der halben Umfangsnut aus Figur 4 gegeben ist. Die jeweilige Gruppe von Ansaugöffnungen 12' befindet sich jedoch in dem Ausführungsbeispiel gemäß Figur 5 in einer Ringnut 42a', 42b', 42c', die deutlich größere axiale Abmessungen als die Umfangsnut im Ausführungsbeispiel gemäß Figur 4 hat. Die Ringnut 42a', 42b', 42c' wird an dem der Umlaufkante 40a', 40b', 40c' entfernten Ende von einer weiteren Umlaufkante 41a', 41b', 41c' begrenzt, so daß sich eine in axialer Richtung konstante Tiefe aufweisende Ringnut 42a', 42b', 42c' ergibt, deren Tiefe der der Umfangsnut aus Figur 4 entspricht. Auch hier bewirken die Ansaugöffnungen 12' einer Gruppe in Zusammenhang mit der ihnen jeweils benachbarten Umlaufkante 40a', 40b', 40c', daß die Materialbahn 10 gegen die jeweilige stufenförmige, endlose Umlaufkante 40a', 40b', 40c' gezogen wird. Ein gewisser, wenn auch weniger ausgeprägter Eingriff der Materialbahn 10 mit der Oberfläche der Trommel 11' entsteht an den der jeweiligen Gruppe von Ansaugöffnungen 12' entfernteren Umlaufkante 41a', 41b', 41c'.

## Patentansprüche

1. Vorrichtung zur Be- oder Verarbeitung einer Materialbahn (10), die von einem Vorratsbereich (2) über eine eine Bearbeitungsfläche bildende, angetriebene Trommel (11, 11') geführt ist, die im axialen Abstand angeordnete, jeweils mit ihren Mitten auf einem Umfangskreis der Trommel (11,11') liegende Gruppen von mindestens 10 Ansaugöffnungen (12, 12') aufweist, deren innere Enden mit einer Unterdruckquelle verbindbar sind und deren äußere Enden in die Bearbeitungsfläche münden, wobei mindestens einigen der Gruppen von Ansaugöffnungen (12, 12') jeweils eine stufenförmige endlose Umlaufkante (40a, 41a, 40b, 41b, 40c, 41c, 40d, 41d; 40a', 40b', 40c') zugeordnet ist, **dadurch gekennzeichnet, daß** im axialen Abstand von 3 mm bis 5 mm vom Umfangskreis zumindest einiger der Gruppen von Ansaugöffnungen (12, 12') die in einer Ebene senkrecht zur Trommellängsachse liegende Umlaufkante (40a, 41a, 40b, 41b, 40c, 41c, 40d, 41d; 40a', 40b', 40c') eine Stufenhöhe von 0,05 mm bis 0,35 mm aufweist.

2. Vorrichtung nach Anspruch 1, **dadurch gekennzeichnet**, daß die Stufenhöhe 0,05 mm bis 0,1 mm beträgt.

3. Vorrichtung nach Anspruch 1 oder 2, **dadurch gekennzeichnet**, daß zu beiden Seiten des Umfangskreises zumindest einiger Gruppen von Ansaugöffnungen (12) stufenförmige, endlose Umlaufkanten (40a, 41a; 40b, 41b; 40c, 41c; 40d, 41d) vorgesehen sind, zwischen denen die Jeweilige Gruppe von Ansaugöffnungen (12) mittig angeordnet ist, und daß der Trommeldurchmesser im Bereich zwischen den zu einer Gruppe von Ansaugöffnungen (12) gehörenden Umlaufkanten (40a, 41a; 40b, 41b; 40c, 41c; 40d, 41d) kleiner als in außerhalb an die Umlaufkanten anschließenden Bereichen ist.

4. Vorrichtung nach Anspruch 3, **dadurch gekennzeichnet**, daß die zwischen den zu einer Gruppe von Ansaugöffnungen (12) gehörenden Umlaufkanten (40a, 41a; 40b, 41b; 40c, 41c; 40d, 41d) gebildete endlose Umfangsnut (42a; 42b; 42c; 42d) in axialer Richtung der Trommel (11) eine konstante Tiefe hat.

5. Vorrichtung nach Anspruch 1 oder 2, **dadurch gekennzeichnet**, daß die einer Umlaufkante (40a'; 40b'; 40c') zugeordnete Gruppe von Ansaugöffnungen (12') sich in einer endlosen Ringnut (42a'; 42b', 42c') befindet, die in axialer Richtung der Trommel (11') konstante Tiefe hat und an der der Umlaufkante (40a'; 40b'; 40c') abgewandten Seite der Gruppe von Ansaugöffnungen (12') eine axiale Erstreckung aufweist, die das 8- bis 20-Fache des Abstandes zwischen der Umlaufkante (40a'; 40b'; 40c') und der Gruppe von Ansaugöffnungen (12') beträgt.

6. Vorrichtung nach Anspruch 5, **dadurch gekennzeichnet**, daß die Ringnut (42a'; 42b'; 42c') an beiden Seiten von einer stufenförmigen, endlosen Umlaufkante (40a', 41a'; 40b', 41b'; 40c', 41c') begrenzt wird.

## Claims

1. Device for treating or processing a material web (10) which is guided from a supply region (2) over a driven drum (11, 11') which forms a treatment surface and which has groups of at least 10 suction ports (12, 12'), the inner ends of which are connectable to a vacuum source and the outer ends of which open into the treatment surface, the said groups being arranged at an axial distance from one another and each lying with their centre on a circumferential circle of the drum (11, 11'), at least some of the groups of suction ports (12, 12') each being assigned a step-shaped endless peripheral edge (40a, 41a, 40b, 41b, 40c, 41c, 40d, 41d; 40a', 40b', 40c'), characterized in that, at an axial distance of 3 mm to 5 mm from the circumferential circle of at least some of the groups of suction ports (12, 12'), the peripheral edge (40a, 41a, 40b, 41b, 40c, 41c, 40d, 41d; 40a', 40b', 40c') lying in a plane perpendicular to the longitudinal axis of the drum has a step height of 0.05 mm to 0.35 mm.

2. Device according to Claim 1, characterized in that the step height is 0.05 mm to 0.1 mm.

3. Device according to Claim 1 or 2, characterized in that there are provided on both sides of the circumferential circle of at least some of the groups of suction ports (12) step-shaped endless peripheral edges (40a, 41a; 40b, 41b; 40c, 41c; 40d, 41d), between which the respective group of suction ports (12) is arranged centrally, and in that the drum diameter is smaller in the region between the peripheral edges (40a, 41a; 40b, 41b; 40c, 41c; 40d, 41d) belonging to a group of suction ports (12) than in regions adjacent to the peripheral edges on the outside.

4. Device according to Claim 3, characterized in that the endless circumferential groove (42a; 42b; 42c; 42d) formed between the peripheral edges (40a, 41a; 40b, 41b; 40c, 41c; 40d, 41d) belonging to a group of suction ports (12) has a constant depth in the axial direction of the drum (11).

5. Device according to Claim 1 or 2, characterized in that the group of suction ports (12') which is assigned to a peripheral edge (40a'; 40b', 40c') is located in an endless annular groove (42a'; 42b'; 42c') which has a constant depth in the axial direction of the drum (11') and, on the side of the group of suction ports (12') which faces away from the peripheral edge (40a'; 40b'; 40c'), has an axial extension which is 8 to 20 times the distance between the peripheral edge (40a'; 40b'; 40c') and the group of suction ports (12').

6. Device according to Claim 5, characterized in that the annular groove (42a'; 42b'; 42c') is limited on both sides by a step-shaped endless peripheral edge (40a', 41a'; 40b', 41b'; 40c', 41c').

## Revendications

1. Dispositif pour traiter ou manipuler une matière en bande (10) qui, à partir d'une zone de réserve (2), est amenée sur un tambour (11, 11') entraîné, constituant une surface de traitement et qui comporte, disposés à intervalles axiaux, des groupes d'au moins dix orifices d'aspiration (12, 12') dont les milieux se situent sur un cercle périphérique du tambour (11, 11') et dont les extrémités internes sont susceptibles d'être reliées à une source de dépression tandis que leurs extrémités externes débouchent sur la surface de traitement, et tandis qu'au moins à quelques uns des groupes d'orifices d'aspiration (12, 12') est respectivement associé un bord périphérique sans fin en forme de gradins (40a, 41a, 40b, 41b, 40c, 41c, 40d, 41d, 40a', 40b', 40c'), dispositif caractérisé en ce qu'à un intervalle axial de 3 à 5 mm du cercle périphérique d'au moins quelques uns des groupes d'orifices d'aspiration (12, 12'), le bord périphérique (40a, 41a, 40b, 41b, 40c, 41c, 40d, 41d ; 40a', 40b', 40c') présente une hauteur de gradins de 0,05 mm à 0,35 mm.

2. Dispositif selon la revendication 1 caractérisé en ce que la hauteur de gradins est de 0,05 mm à 0,1 mm.

3. Dispositif selon la revendication 1 ou la revendication 2 caractérisé en que des deux côtés du cercle périphérique d'au moins quelques groupes d'orifices d'aspiration (12) il est prévu des bords périphériques sans fin (40a, 41a ; 40b, 41b ; 40c, 41c ; 40d, 41d) entre lesquels est disposé dans le milieu le groupe correspondant d'orifices d'aspiration (12), et en ce que le diamètre du tambour dans la zone comprise entre les bords périphériques (40a, 41a ; 40b, 41b ; 40c, 41c ; 40d, 41d) associés à un groupe d'orifices d'aspiration (12), est plus petit que dans les zones se raccordant à l'extérieur aux bords périphériques.

4. Dispositif selon la revendication 3 caractérisé en ce que la gorge périphérique sans fin (42a, 42b, 42c, 42d) formée entre les bords périphériques (40a, 41a ; 40b, 41b ; 40c, 41c ; 40d, 41d) associé à un groupe d'orifices d'aspiration (12), a une profondeur constante dans la direction axiale du tambour (11).

5. Dispositif selon la revendication 1 ou la revendication 2 caractérisé en ce que le groupe d'orifices d'aspiration (12') associé à un bord périphérique (40a', 40b', 40c') se trouve dans une gorge annulaire sans fin (42a', 42b', 42c') qui a une profondeur constante en direction axiale du tambour (11') et qui, sur le côté du groupe des orifices d'aspiration (12') opposé au bord périphérique (40a', 40b', 40c'), a une extension axiale qui est de 8 à 20 fois celle de l'intervalle entre le bord périphérique (40a', 40b', 40c'), et le groupe d'orifices d'aspiration (12').

6. Dispositif selon la revendication 5 caractérisé en ce que la gorge annulaire (42a', 42b', 42c') est délimitée des deux côtés par un bord périphérique sans fin en forme de gradins (40a', 41a' ; 40b', 41b' ; 40c' 41c').
